# EUROPÄISCHE PATENTSCHRIFT

(11) **EP 1 178 761 B1**
(45) Veröffentlichungstag und Bekanntmachung des Hinweises auf die Patenterteilung: **09.03.2005**
(21) Anmeldenummer: 00922402.3
(22) Anmeldetag: 12.05.2000
(51) Int. Cl.: A61C 15/04

(54) **ZAHNREINIGUNGSMITTEL**
TEETH CLEANING MEANS
ARTICLE DE NETTOYAGE DENTAIRE

(30) Priorität: 15.05.1999 CH 92599
(43) Veröffentlichungstag der Anmeldung: 13.02.2002
(73) Patentinhaber: Cortex Hümbelin AG, 5102 Rupperswil (CH)
(72) Erfinder: BUZZI, Carlo, A., CH-8004 Zürich (CH)
(74) Vertreter: Patentanwälte Feldmann & Partner AG
(86) Internationale Anmeldenummer: PCT/CH2000/000265
(87) Internationale Veröffentlichungsnummer: WO 2000/069363

(56) Entgegenhaltungen:
- EP-A- 0 808 610
- US-A- 4 523 600
- US-A- 4 974 615
- US-A- 5 560 377
- US-A- 5 842 489
- US-A- 5 908 039

## Beschreibung

Die vorliegende Erfindung betrifft ein Zahnreinigungsmittel bestehend aus mindestens einem mono- oder multifilaren Faden, gemäss Oberbegriff des Patentanspruches 1.

Zahnreinigungsmittel der eingangs genannten Art sind in sehr vielen Ausführungsformen bekannt. In der Umgangssprache werden diese oftmals als Zahnseide bezeichnet. Meist bestehen diese Zahnreinigungsmittel aus multifilaren Garnen in gewachster oder ungewachster Form. Es sind auch multifilare Garne als Zahnreinigungsmittel bekannt, die eine starke Kräuselung aufweisen und entsprechend stark längenveränderbar und entsprechend im Querschnitt reduzierbar sind. Ein Zahnreinigungsmittel der eingangs genannten Art ist aus der US-A-5'842'489 bekannt und das hierzu erforderliche Texturierungsverfahren ist hierin offenbart.

Solche Zahnreinigungsmittel werden insbesondere zur Reinigung unterhalb von fest angeordneten Zahnprothesen verwendet. Hierbei wird das Zahnreinigungsmittel von der einen Seite unter einer entsprechenden Brücke hindurch geschoben und auf der anderen Seite herausgezogen. Im Gegensatz zu sonst verbreiteter Zahnseide wird somit die Reinigung nicht durch eine Hin- und Herbewegung bewirkt, sondern durch ein Einmalhindurchziehen des Zahnreinigungsmittels. Die abrasive Wirkung ist dabei gering. Würde man beidseitig dieses Element fassen und unter Zug hin- und herbewegen, so würde im Prinzip die Kräuselung wegfallen beziehungsweise glattgestreckt werden, womit das Volumen reduziert wird und die ohnehin geringe abrasive Wirkung nochmals reduziert wird.

Einen weiteren Lösungsansatz zeigt die US-A-4,974,615. Hier wird ein Gummiband mit rechteckigem Querschnitt offenbart, welches zur Erhöhung der abrasiven Wirkung Querschnittsverformungen aufweist, die nach nichttextiltechnischen Methoden gefertigt sind.

Es ist daher die Aufgabe der vorliegenden Erfindung, ein Zahnreinigungsmittel zu schaffen, welches die zuvor genannten Nachteile weitgehend behebt.

Diese Aufgabe löst ein Zahnreinigungsmittel der eingangs genannten Art mit den Merkmalen des kennzeichnenden Teiles des Patentanspruches 1.

Die Wirkung beruht folglich darauf, dass die oder der monofilare oder multifilare Faden beziehungsweise Fäden bei Volumengleichheit sich um ein Mehrfaches ihrer Länge strecken lassen, wobei sich der Querschnitt entsprechend verringert. Beim Einführen des Zahnreinigungsmittels muss entsprechende Kraft aufgewendet werden in der Form von Zugkraft und andererseits üben die Zahnflanken entsprechende Druckkräfte auf das einzuführende Zahnreinigungsmittel aus. Die hochelastischen mono- oder multifilaren Fäden verformen sich entsprechend, wobei sowohl die Querschnittsform als auch die Querschnittsfläche sich verändern. Sobald sich diese Kräfte verringern, was automatisch der Fall ist, wenn der breite Bereich der Zahnzwischenräume erreicht ist, so werden geringere Kräfte benötigt und der Querschnitt verändert sich und die Querschnittsfläche vergrössert sich. Durch die textiltechnische Verarbeitung des Fadens beziehungsweise der Fäden weist das Zahnreinigungsmittel eine Struktur auf, die praktisch je nach Wahl der textiltechnischen Verarbeitung eine mehr oder weniger starke abrasive Wirkung bewirken kann. Die abrasive Wirkung kann zudem noch durch die Gestalt der Querschnittsfläche mindestens eines monofilaren Fadens beeinflusst werden. Weist ein solcher monofilarer Faden beispielsweise eine mehrkantige Querschnittsfläche auf, so bewirkt diese Formgebung zusammen mit den sich durch die textiltechnische Verarbeitung ergebenden Verlaufsrichtungsänderungen eine Struktur, die besonders günstige abrasive Wirkung aufweist.

Weitere vorteilhafte Ausgestaltungsformen des Erfindungsgegenstandes gehen aus den abhängigen Ansprüchen hervor und deren Bedeutung und Wirkungsweise ist in der nachfolgenden Beschreibung mit Bezug auf die beiliegende Zeichnung erläutert. Es zeigt:
- Figur 1: die Einführung des erfindungsgemässen Zahnreinigungsmittels in einen Zahnzwischenraum und
- Figur 2: das Zahnreinigungsmittel im eingeführten Zustand;
- Figur 3: ein Zahnreinigungsmittel mit geschnittenen Verbindungsstellen in unbenutzter Lage;
- Figur 4: ein Zahnreinigungsmittel aus mindestens zwei Fäden und
- Figur 5: ein solches Zahnreinigungsmittel aus einem einzigen Faden;
- Figur 6: zeigt einen Abschnitt eines mehrfarbigen, geflochtenen Zahnreinigungsmittels und die
- Figuren 7 bis 9: zeigen einen bis vier mono- oder multifilare Faden in verschiedenen textiltechnischen Verarbeitungsvarianten.

Wie bereits eingangs erwähnt, besteht das insgesamt mit 1 bezeichnete Zahnreinigungsmittel aus einem oder mehreren Fäden, die je für sich wiederum mono- oder multifilar sein können und aus hochelastischem Material bestehen. Bezüglich den hier in Frage kommenden hochelastischen Materialien sei rein beispielsweise auf LYCRA (Warenzeichen der Firma Du Pont) oder DORLASTAN (Warenzeichen der Firma Bayer AG) verwiesen. Neben den oben genannten Kunststofffäden kommen auch insbesondere monofilare Fäden aus gummiartigem Kunststoff oder aus Naturlatex in Frage. In allen Varianten wird man vorzugsweise lebensmitteltaugliche oder medizinaltechnisch zulässige Produkte verwenden.

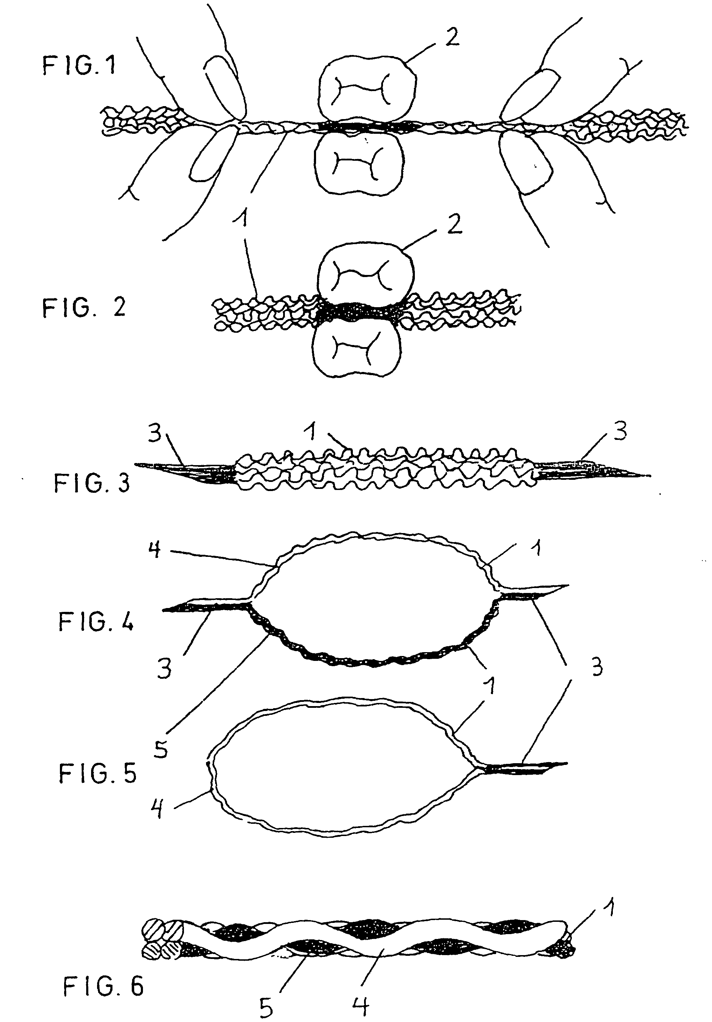

Beim Einführen des Zahnreinigungsmittels 1 in den Zwischenraum zwischen zwei Zähnen 2 wird das Zahnreinigungsmittel 1 unter Zugspannung gehalten, wie dies in der Figur 1 ersichtlich ist. Durch die anliegende Zugbelastung wird das Zahnreinigungsmittel beispielsweise als Geflecht aus hochelastischen Fäden einerseits verlängert und andererseits in Bezug auf ihre Querschnittsfläche wesentlich reduziert. Entsprechend lässt es sich in den relativ engen Zahnzwischenraum einführen ohne zu verklemmen. Entfällt die Zugbelastung, so ziehen sich die hochelastischen Fäden zusammen und ihre Querschnittsfläche nimmt entsprechend wieder zu. Hierbei füllen sie den Zahnzwischenraum, auch wenn dieser grösser ist als im Einführungsbereich, vollständig aus. Diese Situation ist in der Figur 2 dargestellt.

Fertigungstechnisch lässt sich das Zahnreinigungsmittel praktisch endlos fertigen. In regelmässigen Abständen lässt sich das textiltechnisch gefertigte Gebilde aus mehreren Fäden auf relativ kurzen Strecken zu Verbindungsbeziehungsweise Trennstellen gestalten. Diese Verbindungsoder Trennstellen 3 lassen sich durch Verkleben, Verpressen oder Verschweissen fertigen. Die Hauptaufgabe dieser Verbindungs- beziehungsweise Trennstellen besteht darin Bereiche zu definieren, in denen das Endlosprodukt durchtrennt werden kann, ohne dass sich dabei das textile Gebilde auftrennt. Auf dem Markt können dabei sowohl die Endlosprodukte angeboten werden mit den Verbindungsstrecken in regelmässigen Abständen oder auch Teilstücke, die bereits in diesen Bereichen getrennt sind, wie dies die Figur 3 darstellt. Bei der Trennung wird man vorzugsweise einen Schrägschnitt anlegen, der ein Durchführen des Zahnreinigungsmittel beispielsweise unter einer Zahnbrücke hindurch erleichtert. Dabei können selbstverständlich beim endlos gefertigten Produkt durch entsprechende Perforationsschnitte oder anders gestaltete Solltrennstellen die Teilabschnitte vordefiniert sein und trotzdem ein Endlosprodukt, beispielsweise im aufgewickelten Zustand, angeboten werden.

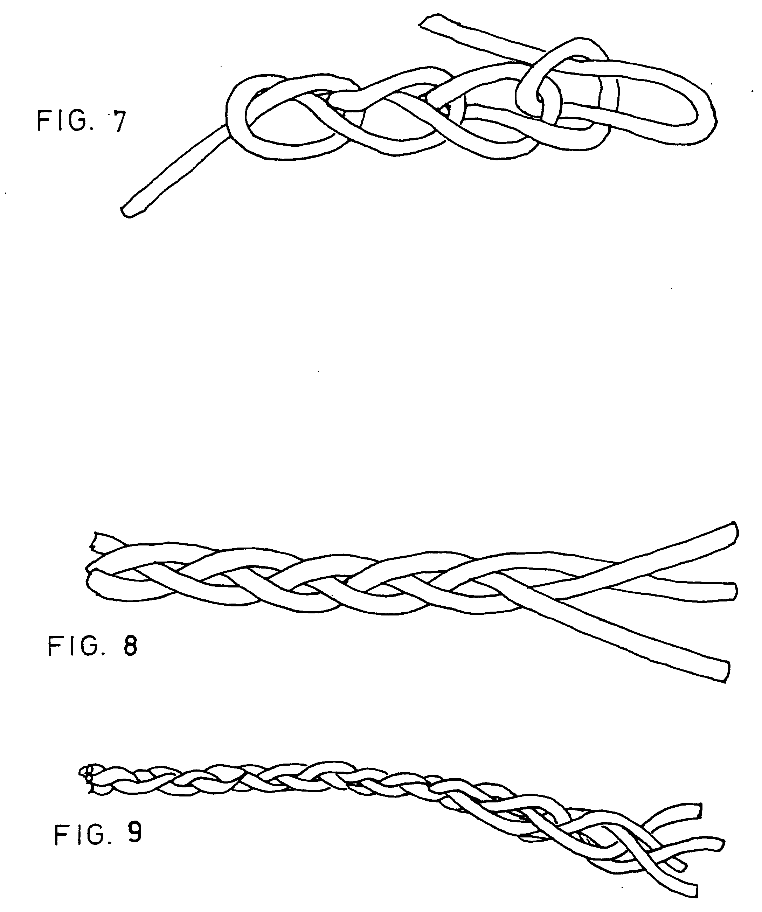

Die Figur 4 ist rein symbolisch zu verstehen. Es soll hierbei lediglich dargestellt werden, dass beispielsweise ein Zahnreinigungsmittel 1 durch Verbindung in den Endbereichen 3 herstellbar ist, wobei der eine Faden 4 aus einem anderen Produkt gefertigt sein kann als der zweite Faden 5. Die Unterschiedlichkeit der beiden Fäden 4 und 5 kann beispielsweise in der Materialwahl liegen oder auch, bei gleicher Materialwahl, in der Farbgebung. Eine solche farbliche Indikation kann beispielsweise als Kundeninformation eine Aufgabe erfüllen, So können je nach Farbcode unterschiedliche Dicken angeboten werden oder der Farbcode kann auch unterschiedliche Anwendungszwecke, wie beispielsweise zur Reinigung von Zahnzwischenräumen einerseits oder zur Reinigung von Zwischenräumen zwischen Gaumen und Zahnbrücke anzeigen. Die Fäden können aber auch unterschiedlich sein in ihrer Struktur. Während der eine Faden beispielsweise 4 eine glatte Oberfläche aufweisen kann, kann der andere Faden 5 eine strukturierte Oberfläche aufweisen. Auch besteht eine Möglichkeit darin, dass der eine Faden eine runde Querschnittsform hat, während der andere Faden eine mehreckige Querschnittsform aufweist. Diese Strukturunterschiede und Querschnittsformunterschiede dienen insbesondere der Erhöhung oder Reduktion der abrasiven Wirkung. Die textiltechnische Verbindung der beiden Fäden ist hier nicht berücksichtigt. Diese hat selbstverständlich vorgängig zu erfolgen. In ähnlicher Darstellung ist in der Figur 5 ein Zahnreinigungsmittel 1 gezeigt, das aus einem einzigen Faden 4 in geschlaufter Form hergestellt sein kann. Auch hier sind dann die beiden gegenläufigen Strangabschnitte des Fadens 4 miteinander textiltechnisch verbunden.

Rein schematisch ist in der Figur 6 ein Abschnitt eines Zahnreinigungsmittels dargestellt aus vier Fäden, bei dem ein Faden 5 in einer anderen Farbe als die übrigen Fäden 4 hergestellt ist.

Die Wahl der Farben hat aber auch für die Benutzer wesentliche Vorteile. Verwendet man Fäden mit heller Farbe, so lässt sich an diesen schnell erkennen, ob ein Zahnfleischbluten vorliegt. Verwendet man Fäden mit dunkler Farbgebung, so können daran die meisten Verunreinigungen gut erkannt werden. Es ist daher für den Benutzer von Vorteil ein Zahnreinigungsmittel zu verwenden, das aus einer Kombination von je mindestens einem hellen und mindestens einem dunklen Farbton besteht.
Wird das Zahnreinigungsmittel aus einem einzigen Faden hergestellt, so kommt als textiltechnische Verarbeitung vor allem die Fertigung in der Form von Knüpfen oder Stricken in Frage, wie dies beispielsweise die Figur 7 darstellt, bei der ein einzelner Faden in erheblich vergrössertem Massstab dargestellt ist. In der Figur 8 hingegen ist eine Herstellungsmethode für drei Fäden dargestellt, wobei als textiltechnische Verarbeitung hier eine Flechtmethode gezeigt ist. Dies trifft auch auf die in Figur 9 dargestellte Methode zu, wobei hier das Zahnreinigungsmittel aus vier Fäden gebildet ist.

Selbstverständlich kommen auch Zahnreinigungsmittel in Frage, die aus noch mehr verschiedenen oder gleichartigen Fäden gefertigt sind. Es macht jedoch keinen Sinn, allzuviele Fäden in sehr dünner Qualität zu verwenden, weil dadurch schlussendlich ein textiltechnisches Gebilde entsteht, welches praktisch keine Struktur aufweist, die noch eine sinnvolle abrasive Tätigkeit bewirkt.

Insbesondere zur Reinigung unter Zahnbrücken kommen auch voluminösere Elemente in Frage. So können Zahnreinigungsmittel für diesen Zweck auch aus einem Gewirke bestehen, das nicht wie die hier dargestellten Formen schnurartige Struktur aufweist, sondern docht- oder schlauchförmige Gestalt haben. Letztlich ist es selbstverständlich auch möglich, das gesamte Zahnreinigungsmittel oder auch lediglich einzelne Fäden mit zahn- oder zahnfleischpflegenden Mitteln zu beschichten. Solche Mittel sind auf dem Markt in grossen Mengen bekannt und lassen sich bei der Fertigung der Fäden problemlos applizieren.

Letztlich sei noch darauf hingewiesen, dass neben den bereits erwähnten Möglichkeiten der Herstellung der Verbindungsstellen durch Verkleben, Verpressen oder Verschmelzen auch noch die Möglichkeit besteht, solche Verbindungen herzustellen durch Drittmaterialien, die in diesem Bereich angebracht sein können. Rein beispielsweise sei auf die Anbringung von Schrumpfschlauchabschnitten oder hülsenartige Kunststoffelemente, die entsprechend schweisstechnisch aufgeklemmt werden können, verwiesen.

### Liste der Bezugszahlen

- 1: Zahnreinigungsmittel
- 2: Zähne
- 3: Verbindungs-Trennstellen
- 4: ein erster Faden
- 5: ein zweiter Faden

## Patentansprüche

1. Endlos gefertigtes Zahnreinigungsmittel (1) bestehend aus mono- oder multifilaren Fäden, wobei die Fäden (4, 5) hochelastisch dehnbar sind und unter Einwirkung von Zugkräften ihre Querschnittsfläche vermindern, **dadurch gekennzeichnet, dass** die mono- oder multifilaren Fäden aus hochelastischem Material durch textiltechnische Verarbeitung, nämlich durch eines der Verfahren aus der Auswahl von Flechten, Weben oder Stricken, zu einem Gebilde geformt sind, das eine abrasiv wirkende Oberfläche aufweist, und dass die Fäden (4, 5) durch die textiltechnische Verarbeitung so untereinander verbunden sind, dass ein Durchtrennen ohne Auftrennung der Fäden möglich ist.

2. Zahnreinigungsmittel nach Anspruch 1, **dadurch gekennzeichnet, dass** das Mittel (1) aus mehreren mono- oder multifilaren Fäden besteht und diese in beliebigen Abständen miteinander auf einer kurzen Strecke unlösbar untereinander verbunden (3) sind.

3. Zahnreinigungsmittel nach Anspruch 2, **dadurch gekennzeichnet, dass** die unlösbare Verbindung (3) durch Verkleben, Verpressen oder Verschweissen erfolgt.

4. Zahnreinigungsmittel nach Anspruch 2, **dadurch gekennzeichnet, dass** an der Verbindungsstelle (3) ein Schrägschnitt oder eine Schrägschnittsolltrennstelle angeordnet ist.

5. Zahnreinigungsmittel nach Anspruch 1, **dadurch gekennzeichnet, dass** die mono- oder multifilaren Fäden (4,5) mindestens mit einem Faden in von den übrigen abweichender Farbgebung versehen sind.

6. Zahnreinigungsmittel nach Anspruch 1, **dadurch gekennzeichnet, dass** mindestens ein Faden (4,5) mit einem hellen und einer mit einem dunklen Farbton vorhanden ist.

7. Zahnreinigungsmittel nach Anspruch 1, **dadurch gekennzeichnet, dass** mindestens zwei monofilare Fäden (4,5) integriert sind mit in der Grösse stark unterschiedlichen Querschnittsflächen, die aus gleichen oder unterschiedlichen Materialien bestehen.

8. Zahnreinigungsmittel nach Anspruch 1, **dadurch gekennzeichnet, dass** mindestens ein mono- oder multifilarer Faden mit zahn- oder zahnfleischpflegenden Mitteln beschichtet ist.

9. Zahnreinigungsmittel nach Anspruch 1, **dadurch gekennzeichnet, dass** die mono- oder multifilaren Fäden (4, 5) aus Latex gefertigt sind.

## Claims

1. An endlessly manufactured tooth cleaning means (1) consisting of monofilament or multifilament threads, wherein the threads (4,5) are highly-elastically stretchable and their cross sectional area reduces under the effect of tensile forces, **characterised in that** the monofilament or multifilament threads of high-elastic material, by way of textile processing, specifically by one of the methods from the selection of braiding, weaving or knitting, are formed into a formation which has an abrasively acting surface, and that the threads (4, 5) by way of the textile processing are connected amongst one another such that a severing is possible without the threads coming undone.

2. A tooth cleaning means according to claim 1, **characterised in that** the means (1) consists of several monofilament or multifilament threads and these at any [desired] intervals, are connected to one another over a short distance in a manner of being nondetachable amongst one another (3).

3. A tooth cleaning means according to claim 2, **characterised in that** the nondetachable connection (3) is effected by bonding, pressing or welding.

4. A tooth cleaning means according to claim 2, **characterised in that** at the connection location (2) there is arranged an oblique cut or an oblique cut separation location.

5. A tooth cleaning means according to claim 1, **characterised in that** the monofilament or multifilament threads (4, 5) are provided at least with one thread in a colouring differing from the remaining ones.

6. A tooth cleaning means according to claim 1, **characterised in that** there are present at least one thread (4, 5) with a bright and with a dark hue [colour tone].

7. A tooth cleaning means according to claim 1, **characterised in that** at least two monofilament threads (4, 5) are integrated with cross sectional areas differing greatly in size and which consist of the same or different materials.

8. A tooth cleaning means according to claim 1, **characterised in that** at least one monofilament or multifilament thread is coated with tooth or gum caring means.

9. A tooth cleaning means according to claim 1 or 2, **characterised in that** the monofilament or multifilament threads (4,5) are manufactured of latex.

## Revendications

1. Article de nettoyage dentaire (1) fabriqué en continu se composant de fibres monofilaires ou multifilaires, auquel cas les fibres (4, 5) sont extensible de façon hautement élastique et sous l'effet de puissances de tirage leur superficies de section diminuent, **caractérisé par le fait que** les fibres monofilaires ou multifilaires sont formées en un produit de matériel hautement élastique par un traitement de la technique du textile, à savoir à travers un procédé provenant du choix de tressage, tissage ou tricotage, ce produit présentant une surface agissant de façon abrasive et que les fibres (4, 5) sont si reliées les unes aux autres grâce au traitement de la technique du textile qu'un sectionnement des fils est possible sans que ceux-ci se défassent.

2. Article de nettoyage dentaire selon la revendication 1, **caractérisé par le fait que** le moyen (1) se compose de plusieurs fibres monofilaires ou multifilaires et que celles-ci sont reliées les unes aux autres de façon indétachable entre elles dans des espacements choisis arbitrairement sur une courte distance.

3. Article de nettoyage dentaire selon la revendication 2, **caractérisé par le fait que** la liaison (3) indétachable a lieu par collage, pressage ou soudage.

4. Article de nettoyage dentaire selon la revendication 2, **caractérisé par le fait qu'**une coupe en biais ou le point de sectionnement prévus de la coupe en biais sont placés au point de liaison (3).

5. Article de nettoyage dentaire selon la revendication 1, **caractérisé par le fait que** les fibres (4, 5) monofilaires ou multifilaires sont équipées au moins avec une fibre dans une coloration différente du reste.

6. Article de nettoyage dentaire selon la revendication 1, **caractérisé par le fait qu'**au moins une fibre (4, 5) avec une teinte claire et une avec une teinte foncée existent.

7. Article de nettoyage dentaire selon la revendication 1, **caractérisé par le fait qu'**au moins deux fibres (4, 5) monofilaires sont intégrées avec les superficies de la section étant fortement différentes dans la dimension qui se composent de matériaux identiques ou différents.

8. Article de nettoyage dentaire selon la revendication 1, **caractérisé par le fait qu'**au moins une fibre monofilaire ou multifilaire est recouverte avec des moyens dentaires ou des moyens de traitement gingivale.

9. Article de nettoyage dentaire selon la revendication 1, **caractérisé par le fait que** les fibres (4, 5) monofilaires ou multifilaires sont fabriquées en latex.
